# EUROPEAN PATENT APPLICATION

(11) **EP 1 522 743 A1**
(43) Date of publication of application: **13.04.2005**
(21) Application number: 03022432.3
(22) Date of filing: 07.10.2003
(51) Int. Cl.: F16B 7/18, E03F 9/00, B08B 9/04

(54) **Connector for pipe snake rods**

(71) Applicant: Wu, Kuei-Kun, Kaohsiung (TW)
(72) Inventor: Wu, Kuei-Kun, Kaohsiung (TW)
(74) Representative: Casalonga, Axel

(57) **Abstract**

A connector (20) for pipe snake rods has a first rod element (21), a second rod element (22) and a collar (23). The rod elements (21,22) are attached respectively to the rods (11,12), and each has an outer thread (213,223) and an abutting protrusion (212,222). The collar (23) has an inner thread (231) screwed onto the outer threads (213,223) on the rod elements (21,22) to connect the rod elements (21,22) together. The abutting protrusions (212,222) are mated to each other when the rod elements (21,22) are connected together. Accordingly, the connector (20) can keep the rods (11,12) from separating from each other when the pipe snake is operating and make the pipe snake convenient and versatile in use.

## Description

### 1. Field of the Invention

The present invention relates to a connector, and more particularly to a connector to connect two pipe snake rods keep the pipe snake rods from separating from each other when the pipe snake is operated.

### 2. Description of Related Art

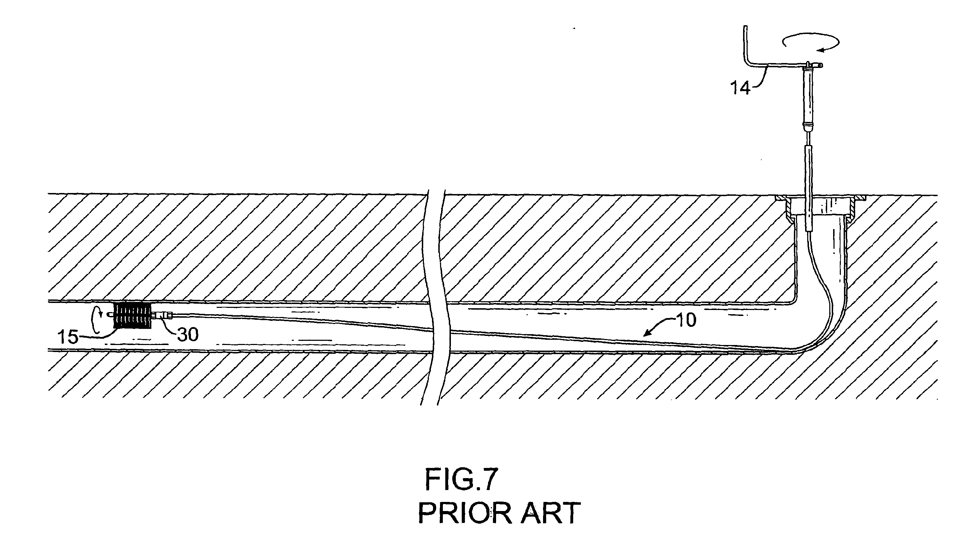

With reference to Fig. 7, a pipe snake (10) is used to clean or clear obstructions from a pipe and comprises at least two pipe snake rods (not numbered) connected to each other, a handle (14) and a head (15). The handle (14) and the head (15) are connected respectively to two ends (not numbered) of the connected at least two pipe snake rods. The pipe snake rods are always made of flexible material to allow the pipe snake (10) to extend into pipes with angular bends and joints. Accordingly, a person can operate the pipe snake (10) and clean or clear a pipe with the head (15) from the handle (14) outside the pipe. To connect adjacent pipe snake rods, a connector (30) is connected between adjacent pipe snake rods.

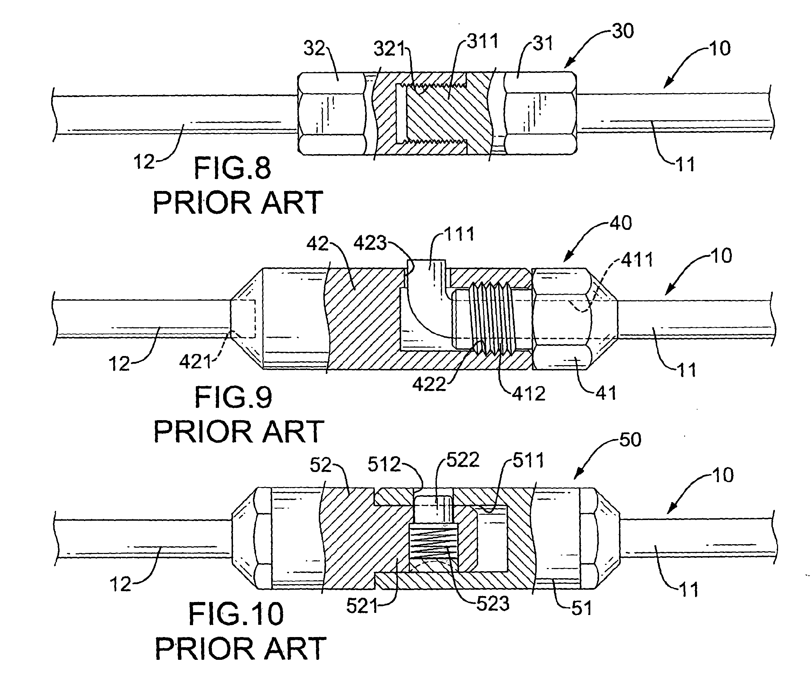

With further reference to Fig. 8, a first conventional connector (30) for a pipe snake (10) comprises a male fastener (31) and a female fastener (32).

The male fastener (31) has a distal end (not numbered), a proximal end (not numbered) and a threaded stub (311). The proximal end is attached to an end of a first pipe snake rod (11), and the threaded stub (311) is formed axially on and protrudes from the distal end.

The female fastener (32) has a distal end (not numbered), a proximal end (not numbered) and a threaded hole (321). The proximal end is attached to a second pipe snake rod (12). The threaded hole (321) is defined axially in the distal end to screw onto the threaded stub (311) on the male fastener (31).

However, rotation of the pipe snake (10) in a direction counter to the direction of the threads on the male and female fasteners (31, 32) easily causes the male and female fasteners (31, 32) to disconnect from each other. Consequently, particular attention must be paid to the direction of rotation of the pipe snake (10) based on the particular arrangement of the male and female fasteners (31, 32).

Because of the foregoing shortcomings, the first conventional connector (30) is inconvenient to use and easily causes more serious problems when a first conventional connector (30) inadvertently disconnects in a pipe so the head and attached pipe snake rod further obstruct the pipe.

With reference to Fig. 9, a second conventional connector (40) in accordance with the prior art comprises a male fastener (41) and a female fastener (42). The male fastener (41) is rotatably and slidably mounted around one end of a first pipe snake rod (11') and has a distal end (not numbered), a proximal end (not numbered), an axial hole (411) and an outer thread (412). The axial hole (411) is defined through the male fastener (41) from the proximal end to the distal end so one end of the first pipe snake rod (11') can extend through the axial hole (411). The outer thread (412) is formed near the distal end.

The female fastener is attached to the second pipe snake rod (12) and has a distal end (not numbered), a proximal end (not numbered) attached to the other rod, an axial hole (not numbered) and a radial hole (423). The proximal end is attached to the second pipe snake rod (12). The axial hole is defined in the distal end and has an inner thread (422) to screw onto the outer thread (412) on the male fastener (41). The radial hole (423) is defined near the distal end and communicates with the axial hole. A hook (111) is formed on the end of the pipe snake rod (11') around which the male fastener (41) is mounted.

To connect the first and second pipe snake rods (11', 12) with the connector (40), the hook portion (111) is inserted into the radial hole (423) in the female fastener (42) through the axial hole firstly. Then, the distal end of the male fastener (41) is inserted into the axial hole in the female fastener (42). The male fastener (41) is screwed into the female fastener (42). The hook (411) on the first pipe snake rod (11') inserted into the radial hole (423) prevents the first pipe snake rode (11') from rotating relative to the second pipe snake rod (12) so the male fastener (41) will not disconnect from the female fastener (42) when the pipe snake (10') is rotating. However, to keep the hook portion (111) in the radial hole (423), the pipe snake rod (11') must be made of rigid material rather than flexible material. Therefore, the second conventional connector (40) cannot be used in a pipe snake (10') with flexible pipe snake rods (11', 12) and is not versatile in use.

With reference to Fig. 10, a third conventional connector (50) comprises a female fastener (51), a male fastener (52) and a lock (not numbered). The female fastener (51) has a distal end (not numbered), a proximal end (not numbered), an axial socket (511) and a bolt hole (512). The proximal end is attached to an end of first pipe snake rod (11). The axial socket (511) is defined in the distal end of the female fastener (51). The bolt hole (512) is defined radially near the distal end of the female fastener (51) and communicates with the axial socket (511).

The male fastener (52) has a distal end (not numbered), a proximal end (not numbered), a stub (521) and a radial through hole (not numbered). The proximal end is attached to the second pipe snake rod (12). The stub (521) is formed on and extends from the distal end of the male fastener (52) to extend into the axial socket (511) in the female fastener (51). The radial through hole has an internal annular shoulder and is defined through the stub (521) to correspond to the bolt hole (512) in the female fastener when the stub (521) is inserted into the axial socket (511).

The lock comprises a locking bolt (522) and a biasing member (523). The locking bolt (522) has an annular flange (not numbered) and a head (not numbered) and is mounted in and is selectively exposed from the radial through hole in the male fastener (52). The biasing member (523) is mounted in the radial through hole and abuts the annular flange on the locking bolt (522) and cause the locking bolt (522) to selectively extend from the radial through hole. When the stub (521) on the male fastener (52) is inserted into the central hole (511) in the female fastener (51), the locking (522) engages the bolt hold (512) in the female fastener (51). With the engagement between the locking bolt (522) and the bolt hole (512), the fasteners (51, 52) holds the pipe snake rods (11, 12) together.

However, the strength of the locking bolt (522) and the bolt hole (512) in the connector (50) is not enough to bear a large load between the pipe snake rods (11, 12).

To overcome the shortcomings, the present invention provides a connector to mitigate or obviate the aforementioned problems.

The main objective of the invention is to provide a connector for pipe snake rods that can keep the rods from disconnecting from each other during operation of the pipe snake and is convenient and versatile in use. The connector has a first rod element, a second rod element and a collar. The rod elements are attached respectively to the rods, and each has an outer thread and an abutting protrusion. The collar has an inner thread screwed onto the outer threads on the rod elements to connect the rod elements together. The abutting protrusions are interlocked with each other when the rod elements are connected together.

Other objectives, advantages and novel features of the invention will become more apparent from the following detailed description when taken in conjunction with the accompanying drawings.

### IN THE DRAWINGS

Fig. 1 is an exploded perspective view of two pipe snake rods and a first embodiment of a connector in accordance with the present invention;
Fig. 2 is a side plan view in partial section of the pipe snake rods with the connector in Fig. 1;
Fig. 3 is an operational side plan view in partial section of the pipe snake rods with the connector in Fig. 1;
Fig. 4 is an exploded perspective view of two pipe snake rods and a second embodiment of a connector in accordance with the present invention;
Fig. 5 is a side plan view in partial section of the pipe snake rods with the connector in Fig. 4;
Fig. 6 is a side plan view of a pipe snake with connectors in accordance with the present invention;
Fig. 7 is an operational side plan view in partial cross section of a pipe snake extending into a bent pipe;
Fig. 8 is a side plan view in partial section of two pipe snake rods and a first conventional connector in accordance with the prior art;
Fig. 9 is a side plan view in partial section of two pipe snake rods and a second conventional connector in accordance with the prior art; and
Fig. 10 is a side plan view in partial section of two pipe snake rods and a third conventional connector in accordance with the prior art.

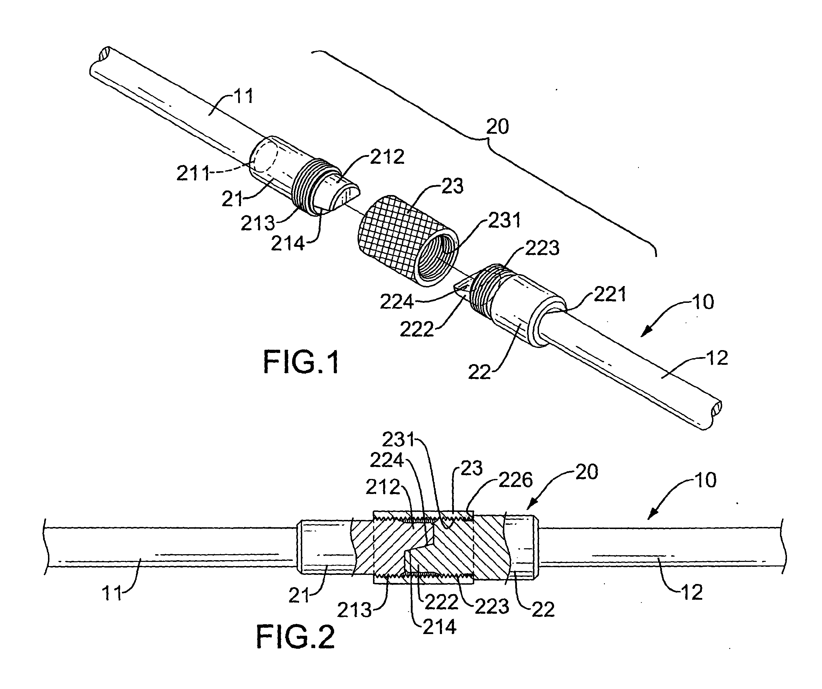

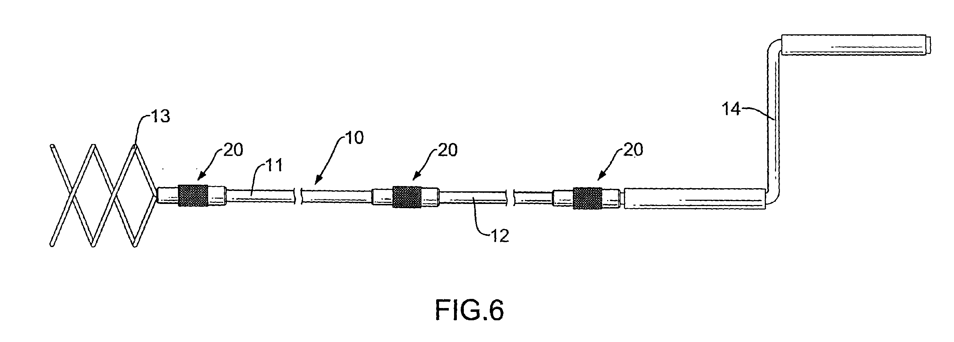

With reference to Figs. 1, 2 and 6, a connector (20) for connecting a first pipe snake rod (11) and a second pipe snake rod (12) in a pipe snake (10) in accordance with the present invention comprises a first rod element (21), a second rod element (22) and a collar (23).

The first rod element (21) is securely attached to the first pipe snake rod (11) and has a distal end (not numbered), a proximal end (not numbered), an outer thread (213) and a first abutting protrusion (212). The proximal end is securely attached to the first pipe snake rod (11). An axial hole (211) may be defined in the proximal end so one end of the first pipe snake rod (11) can be inserted into and welded in the axial hole (211). Alternately, a soldering process or adhesive can be used to attach the first pipe snake rod (11) to the first rod element (21). The outer thread (213) is formed at the distal end. The first abutting protrusion (212) is formed on and extends longitudinally from the distal end.

The second rod element (22) is attached to the second pipe snake rod (12) and has a distal end (not numbered), a proximal end (not numbered), an outer thread (223) and a second abutting protrusion (222). The proximal end is securely attached to the second pipe snake rod (12). An axial hole (221) may be defined in the proximal end so one end of the second pipe snake rod (12) can be inserted into and welded in the axial hole (221). Alternately, a soldering process or adhesive can be used to attach the second pipe snake rod (12) to the second rod element (22). The outer thread (223) is formed at the distal end. The second abutting protrusion (222) is formed on and extends from the longitudinally distal end and is complementary to the first abutting protrusion (212). The second abutting protrusion (222) mates with the first abutting protrusion (212) on the first rod element (21) when the first and second rod elements (21, 22) are pressed together.

In one implementation, the first and second abutting protrusions (212, 222) are the same and are semicylindrical with longitudinal contact surfaces (214, 224) and transverse contact surfaces (not numbered). The longitudinal contact surfaces (214, 224) are either slightly inclined or straight.

The collar (23) is a hollow cylinder, has two open ends (not numbered) and an inner thread (231) and is screwed onto the outer threads (213, 223) on the rod elements (21,22).

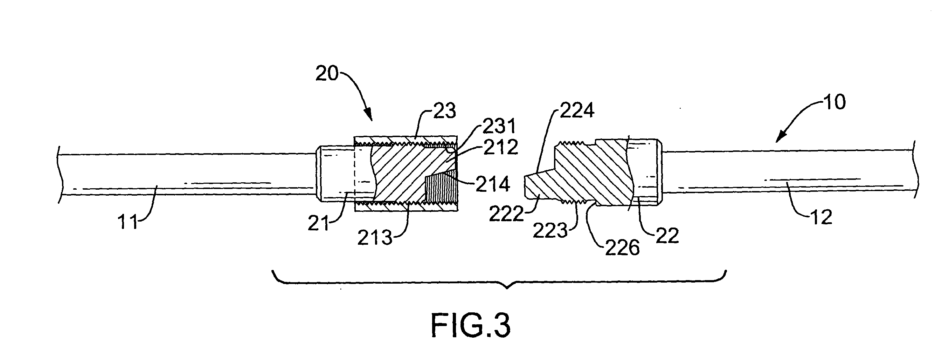

With further reference to Fig. 3, the collar (23) is attached to the rod elements (21, 22) by screwing the collar (23) onto the outer thread (213) on the first rod element (23) first. When one end of the collar (23) is flush with the end of the first abutting protrusion (212), the second abutting protrusion (222) is inserted into the collar (23) and is mated with the first abutting protrusion (212). Then the collar (23) is screwed onto the outer thread (223) on the second rod element (22) to complete the connection of the rod elements (21, 22) and the pipe snake rods (11,12).

The mated abutting protrusions (212, 222) held together by the collar (23) keep the rod elements (21, 22) from separating from each other no matter which direction the pipe snake (10) rotates. Furthermore, the connection between the two rod elements (21, 22) is strong enough to bear a large load the contact surfaces (214, 224) between the abutting protrusions (212, 222) are large. A force applied to a handle (14) can transmitted efficiently to the head (13) through the connectors (20) even when the pipe snake rods (11, 12) are made of flexible material. The pipe snake (10) with connectors (20) in accordance with the present invention is convenient and versatile in use.

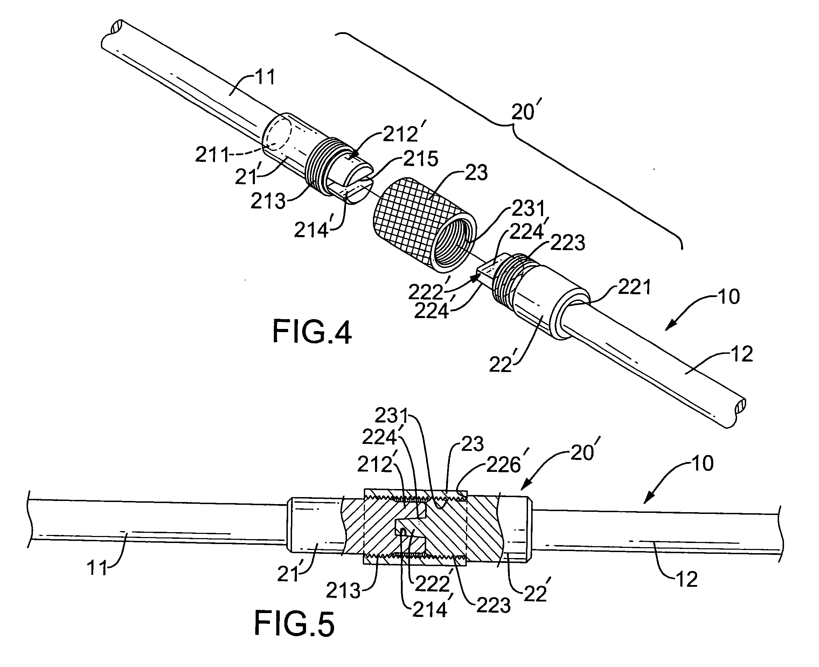

With reference to Figs. 4 and 5, a second embodiment of a connector (20') in accordance with the present invention is the same as the first embodiment of the connector (20) except the configuration of the abutting protrusions (212', 222'). The first abutting protrusion (212') is cylindrical and has a radial mortise (215) formed longitudinally in the first abutting protrusion (212'). The radial mortise (215) has two inner contact surfaces (not numbered). The second abutting protrusion (222') is a tenon (not numbered) and has two outer contact surfaces (not numbered) extending from the distal end of the second rod element (22'). The inner contact surfaces in the mortise (215) may be straight or inclined, and the outer contact surfaces on the tenon are straight or inclined to correspond to the inner contact surfaces of the mortise (215). The tenon mates with the mortise (215) in the first abutting protrusion (212') when the rod elements (21', 22') are connected. The mortise (215) and the tenon enhance the connection between the abutting protrusions (212', 222').

With reference to Figs, 1, 2, 4 and 5, the proximal end of the second rod element (22, 22') in an optional embodiment of the connectors (20, 20') has a diameter larger than the distal end of the second rod element (22, 22') to define a shoulder (226, 226') between the proximal end and the distal end. When the collar (23) is screwed onto the outer thread (223) on the second rod element (22, 22'), one end of the collar (23) will abut the shoulder (226, 226') to hold the collar (23) in place relative to the second rod element (22, 22').

Even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A connector for pipe snake rods comprising:
a first rod element (21) having
a distal end;
a proximal end to be attached to one of the rods;
an outer thread (213) formed at the distal end; and
a first abutting protrusion (212) formed on and extending longitudinally from the distal end;
a second rod element (22) coupled with the first rod element (21) and having
a distal end;
a proximal end to be attached to another rod;
an outer thread (223) formed at the distal end; and
a second abutting protrusion (222) complementary to the first abutting protrusion (212) and formed on the distal end to mate with the first abutting protrusion (212) on the first rod element (21); and
a collar (23) with an inner thread (231) screwed onto the outer threads (213) on the first rod element (21) and screwed onto the outer thread (223) on the second rod element (22) after the first and second abutting protrusions (212,222) are mated.

2. The connector as claimed in claim 1, wherein the first abutting protrusion (212) is semicylindrical and has a contact surface (214); and
the second abutting protrusion (222) is semicylindrical and has a contact surface (224) to mate with the contact surface (214) on the first abutting protrusion(212).

3. The connector as claimed in claim 2, wherein the contact surfaces (214,224) on the first and second abutting protrusion (212,222) are straight.

4. The connector as claimed in claim 2, wherein the contact surfaces (214,224) on the first and second abutting protrusion (212,222) are inclined.

5. The connector as claimed in claim 1, wherein the first abutting protrusion (212') is cylindrical and has a radial mortise (215) having two inner contact surfaces (214') being defined longitudinally in the first abutting protrusion (212'); and
the second abutting protrusion (222') is a tenon with two contact surfaces (224') to extend into the radial mortise (215) in the first abutting protrusion (212').

6. The connector as claimed in claim 5, wherein
the mortise contact surfaces (214') in the first abutting protrusion (212') are straight; and
the tenon contact surfaces (224') on the second abutting protrusion (222') are straight and correspond respectively to the straight inner contact surfaces (214') of the mortise (215).

7. The connector as claimed in claim 5, wherein
the mortise contact surfaces (214') in the first abutting protrusion (212') are inclined; and
the tenon contact surfaces (224') on the second abutting protrusion (222') are inclined and correspond respectively to the inclined inner contact surfaces (214') of the mortise (212').

8. The connector as claimed in claim 1, wherein the proximal end of the second rod element (22) has a diameter larger than the distal end of the second rod element (22) to define a shoulder (226) between the proximal end and the distal end such that one end of the collar (23) abuts the shoulder (226) when the collar (23) is screwed onto the outer thread (223) on the second rod element (22).
